# EUROPEAN PATENT APPLICATION

(11) **EP 4 703 244 A1**
(43) Date of publication of application: **04.03.2026**
(21) Application number: 25197710.4
(22) Date of filing: 22.08.2025
(51) Int. Cl.: B62D 55/28

(54) **FOREST MACHINE TRACK**

(30) Priority: 28.08.2024 EP 24196894
(71) Applicant: Nordic Traction Oy, 32200 Loimaa (FI)
(72) Inventor: Broens, Renoldus, 24240 Salo (FI)
(74) Representative: Berggren Oy

(57) **Abstract**

The present invention relates to a forest machine track (100) that comprises track plates (101) and C-shaped track links (102, 103), which are attached to ends of the track plates (101). The C-shaped track links (102, 103) of adjacent track plates (101) are connected to each other with connecting links (104, 105). Each connecting link (104, 105) comprises a first connecting part (108) and a second connecting part (109), which are releasably attached to each other, and wherein the first connecting part (108) and the second connecting part (109) are connected to different C-shaped track links (102, 103).

## Description

### TECHNICAL FIELD OF THE INVENTION

The present invention relates to a forest machine track according to the preamble of the appended independent claim.

### BACKGROUND OF THE INVENTION

Forest machines, such as harvesters and forwarders, are usually equipped with removable tracks to improve traction and flotation. A conventional track for a forest machine comprises track plates arranged side by side at a distance from each other and having C-shaped track links attached to their ends. The C-shaped track links of the adjacent track plates are connected to each other with connecting links. The track plates are arranged in such a manner that when the track is installed around tyres, the longitudinal directions of the track plates are perpendicular to the direction of motion of the track. The track is provided with side guides attached to the C-shaped track links to keep the track on top of the tyres and prevent the track to get misaligned.

A forest machine track increases the contact area with the ground, and thus it decreases the surface pressure produced by a forest machine on the ground. By changing the size of and the distance between the track plates, the forest machine tracks can be optimized for different terrains. Generally, close spaced tracks with wide plates are better suited to soft terrains and wider spaced tracks with narrower plates are better suited to harder terrains and steeper slopes, offering greater climbing ability.

A problem associated with the known forest machine tracks is that they are difficult to repair. When a known forest machine track is damaged and one or more of its parts need to be replaced, cutting and welding are needed in repairing the track. This is difficult and time-consuming, especially on a forest site. Another problem associated with the known forest machine tracks is that they only work well on the terrain for which they are designed for. The structure of the known forest machine tracks cannot be adapted.

### OBJECTIVES OF THE INVENTION

It is the main objective of the present invention to reduce or even eliminate the prior art problems presented above.

It is an objective of the present invention to provide a forest machine track that can be easily repaired. It is also an objective of the invention to provide a forest machine track that can be used on various terrains. It is a further objective of the invention to provide a forest machine track whose length can be easily changed.

In order to realise the above-mentioned objectives, the forest machine track according to the invention is characterised by what is presented in the characterising portion of the appended independent claim. Advantageous embodiments of the invention are described in the dependent claims.

### DESCRIPTION OF THE INVENTION

A forest machine track according to the invention comprises a plurality of track plates having first and second ends, a plurality of first C-shaped track links attached to the first ends of the plurality of track plates, a plurality of second C-shaped track links attached to the second ends of the plurality of track plates, a plurality of first connecting links with which the first C-shaped track links of adjacent track plates are connected to each other, and a plurality of second connecting links with which the second C-shaped track links of adjacent track plates are connected to each other. In the forest machine track according to the invention each of the plurality of first and second connecting links comprises a first connecting part and a second connecting part releasably attached to each other, wherein the first connecting part and the second connecting part are connected to different C-shaped track links.

The forest machine track according to the invention is a bogie track that can be installed around two tyres of a forest machine, such as a harvester or a forwarder. The track plates are arranged in the forest machine track in such a manner that when the forest machine track is installed around the tyres, the longitudinal directions of the track plates are perpendicular to the direction of motion of the forest machine track.

The track plates are arranged side by side at a distance from each other. The track plates can be straight or slightly curved in the longitudinal direction, and one or both of their edges can be bent. The number of track plates can be, for example, 15-50. The distance between the track plates can be, for example, 1-50 cm. The length of the track plates can be, for example, 30-150 cm. The width of the track plates can be, for example, 5-25 cm. The track plates are preferably made of heat-treated iron alloy.

The first and second C-shaped track links are attached to the first and second ends of the track plates, respectively. The first and second C-shaped track links are attached to the track plates by welding or with suitable fasteners. The first and second C-shaped track links are attached to the track plates in such a manner that they are perpendicular to the longitudinal direction of the track plate. The length of the first and second C-shaped track links can be, for example, 10-40 cm. The first and second C-shaped track links are preferably made of heat-treated iron alloy.

The first and second C-shaped track links are connected to each other with the first and second connecting links, respectively. Each first connecting link is connected between the first C-shaped track links of the adjacent track plates, and each second connecting link is connected between the second C-shaped track links of the adjacent track plates. The length of the first and second connecting links can be, for example, 10-40 cm. The first and second connecting links are preferably made of heat-treated iron alloy.

Each first connecting link and each second connecting link comprises two connecting parts, i.e. the first connecting part and the second connecting part, which are releasably attached to each other. The first connecting part and the second connecting part of the connecting link are releasably attached to each other with suitable fasteners. The first connecting part and the second connecting part of the connecting link are connected to different C-shaped track links. Preferably, the first and second connecting parts are identical parts, which are connected in a reversed orientation to the C-shaped track links. Because the first and second connecting parts of the first and second connecting links are releasably attached to each other, a track section containing one or more track plates can be easily removed, replaced, or added.

In addition to the track plates which are releasably attached to each other, the forest machine track may also comprise one or more track plates which are fixedly attached to each other using conventional non-releasable connecting links.

An advantage of the forest machine track according to the invention is that it can be easily repaired without cutting and welding. The releasably attached first and second connecting parts allow a damaged track section of the forest machine track to be easily replaced with a new track section. Another advantage of the forest machine track according to the invention is that its length can be easily changed by adding or removing one or more track plates.

According to an embodiment of the invention the first connecting part comprises a first contact surface having a plurality of first teeth and the second connecting part comprises a second contact surface having a plurality of second teeth, wherein the first contact surface and the second contact surface are arranged against each other so that the plurality of first and second teeth are at least partly connected. Depending on the relative position between the first and second teeth, the connecting link can have different lengths. In other words, the length of the connecting link can be varied by changing the relative position between the first and second teeth.

The first contact surface is an essentially planar surface from which the first teeth protrude. The first teeth are arranged side by side at a distance from each other. Likewise, the second contact surface is an essentially planar surface from which the second teeth protrude. The second teeth are arranged side by side at a distance from each other. The height of the first and second teeth can be, for example, 1-10 mm. The pitch of the first and second teeth, i.e., the distance between corresponding points on the adjacent teeth, can be, for example, 10-50 mm, or 15-30 mm. If the pitch is, for example, 20 mm, this means that the length of the first and second connecting links can be increased or decreased in steps of 20 mm.

An advantage of this embodiment is that, by changing the lengths of the first and second connecting links, the distance between the track plates can be varied. Thus, the forest machine track can be optimized for different terrains. Another advantage of this embodiment is that it enables the compensation for the wearing of the first and second connecting links to keep the forest machine track correctly tensioned. Small pitch of the first and second teeth allows to keep the tension force of the forest machine track essentially constant, reducing wear and tear on the track, on the tyres, and on the axles of the forest machine.

According to an embodiment of the invention the number of the first and second teeth is at least three. The number of the first and second teeth is preferably 3-12, and more preferably 5-10. Preferably, the first and second connecting links have an equal number of the first and second teeth.

According to an embodiment of the invention each of the plurality of first and second connecting links comprises a fastening bolt arranged to extend through a first opening in the first connecting part and a second opening in the second connecting part, and a nut coupled to an end of the fastening bolt. The fastening bolt together with the nut keep the first connecting part and the second connecting part attached together. When the first and second connecting parts of the connecting link need to be separated, this can be done by removing the nut from the fastening bolt. The length of the fastening bolt can be, for example, 30-80 mm. The diameter of the fastening bolt can be, for example, 14-30 mm. Preferably, the fastening bolt and the nut are made of heat-treated iron alloy.

An advantage of this embodiment is that the first and second connecting parts of the connecting link can be easily detached and reattached.

According to an embodiment of the invention the fastening bolt has a length which allows the length of the connecting link to be changed without removing the nut from the fastening bolt. The length of the connecting link can be changed by loosening the nut, changing the relative position between the first and second teeth, and then retightening the nut. This means that the first and second connecting parts of the connecting link remain connected to each other with the fastening bolt and the nut during the whole process of changing the length of the connecting link.

An advantage of this embodiment is that it allows the length of the connecting link to be changed without completely separating the first and second connecting parts from each other.

According to an embodiment of the invention the first and second openings are elongated. The length of the first and second openings can be, for example, 40-100 mm. The width of the first and second openings can be, for example, 15-32 mm. Preferably, the width of the first and second openings is essentially the same as the diameter of the fastening bolt.

According to an embodiment of the invention the fastening bolt and/or the nut is provided with a washer. Preferably, the washer is made of heat-treated iron alloy.

According to an embodiment of the invention the first connecting part and the second connecting part comprises a pin with which the connecting part is connected to an end of the C-shaped track link. The pin has preferably a round cross section.

According to an embodiment of the invention the forest machine track comprises a plurality of first side guides attached to the plurality of first C-shaped track links and a plurality of second side guides attached to the plurality of second C-shaped track links. The first and second side guides are attached to the C-shaped track links by welding or with suitable fasteners.

An advantage of this embodiment is that the first and second side guides keep the forest machine track on top of tyres and prevent it to get misaligned.

According to an embodiment of the invention the track plates, C-shaped track links, connecting links and/or side guides are made of heat-treated iron alloy. An advantage of heat-treated iron alloy is that it is hard, strong and wear-resistant.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

### BRIEF DESCRIPTION OF THE DRAWINGS

- Fig. 1: illustrates a forest machine track according to a first embodiment of the invention,
- fig. 2: illustrates two interconnected track plates of the forest machine track of fig. 1,
- figs. 3A-3B: illustrate a connecting link of the forest machine track of fig. 1 at two different lengths, and
- fig. 4: illustrates a forest machine track according to a second embodiment of the invention.

### DETAILED DESCRIPTION OF THE DRAWINGS

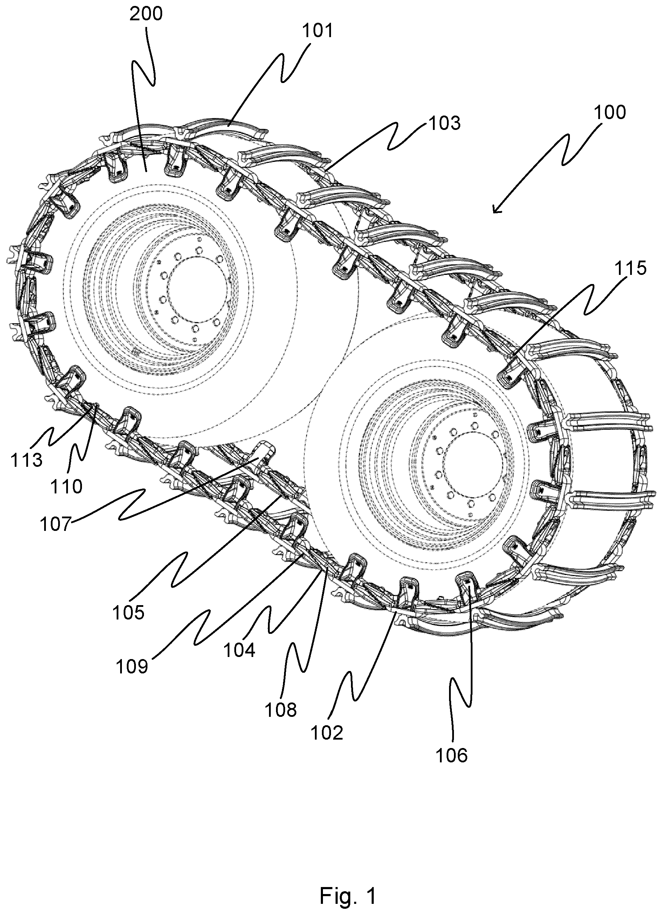

Fig. 1 illustrates a forest machine track according to a first embodiment of the invention. The forest machine track 100 is a bogie track that is installed around two tyres 200 of a forest machine.

The forest machine track 100 comprises track plates 101, which are arranged side by side at a distance from each other. The track plates 101 are arranged so that the longitudinal directions of the track plates 101 are perpendicular to the direction of motion of the forest machine track 100. The track plates 101 are slightly curved in the longitudinal direction.

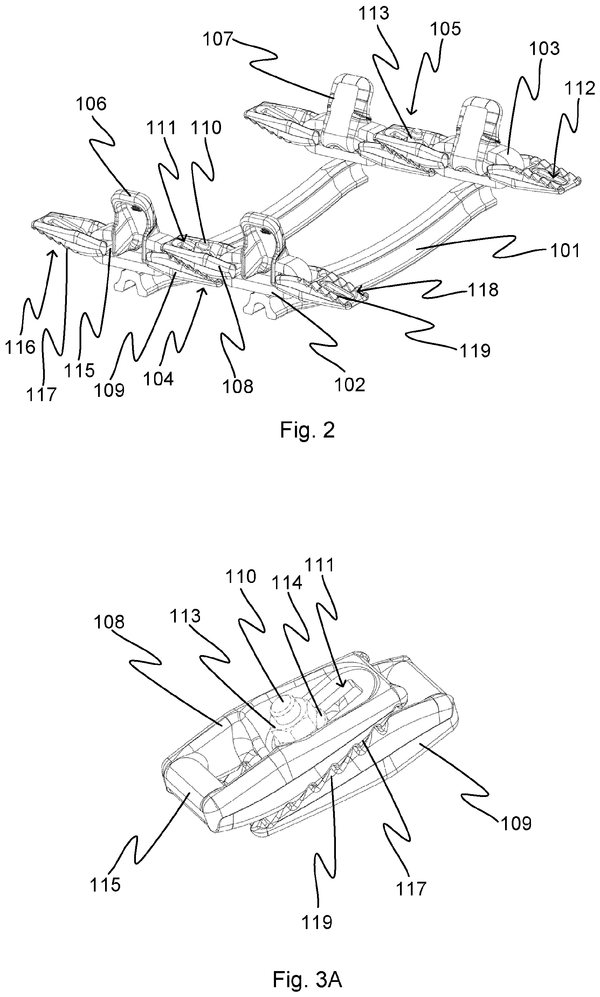

The forest machine track 100 comprises first C-shaped track links 102, which are attached to the first ends of the track plates 101, and second C-shaped track links 103, which are attached to the second ends of the track plates 101. The first and second C-shaped track links 102 and 103 are attached to the track plates 101 so that they are perpendicular to the longitudinal direction of the track plate 101. The first C-shaped track links 102 of the adjacent track plates 101 are connected to each other with first connecting links 104, and the second C-shaped track links 103 of the adjacent track plates 101 are connected to each other with second connecting links 105. The connection between two adjacent track plates 101 is illustrated in more detail in fig. 2.

The forest machine track 100 comprises first side guides 106, which are attached to the first C-shaped track links 102, and second side guides 107, which are attached to the second C-shaped track links 103. The first and second side guides 106 and 107 keep the forest machine track 100 on top of the tyres 200 and prevent it to get misaligned.

Each of the first and second connecting links 104 and 105 comprises a first connecting part 108 and a second connecting part 109, which are releasably attached to each other with a fastening bolt 110 that is arranged to extend through a first opening 111 in the first connecting part 108 and a second opening 112 in the second connecting part 109, and a nut 113 that is coupled to an end of the fastening bolt 110. The nut 113 is provided with a washer 114. The first and second openings 111 and 112 are elongated, and their width is essentially the same as the diameter of the fastening bolt 110. When the first and second connecting parts 108 and 109 need to be separated, this can be done by removing the nut 113 from the fastening bolt 110. Because the first and second connecting parts 108 and 109 are releasably attached to each other, a track section containing one or more track plates 101 can be easily removed, replaced, or added without cutting and welding the forest machine track 100.

The first and second connecting parts 108 and 109 of the first connecting link 104 are connected to different first C-shaped track links 102 of the adjacent track plates 101. Likewise, the first and second connecting parts 108 and 109 of the second connecting link 105 are connected to different second C-shaped track links 103 of the adjacent track plates 101. The first and second connecting parts 108 and 109 are identical parts, and they are connected in a reversed orientation to the C-shaped track links 102 or 103. The first and second connecting parts 108 and 109 comprise a pin 115 with which the connecting part 108 or 109 is connected to an end of the C-shaped track link 102 or 103.

The first connecting part 108 comprises a first contact surface 116 having first teeth 117 and the second connecting part 109 comprises a second contact surface 118 having second teeth 119. The first and second contact surfaces 116 and 118 are essentially planar surfaces from which the first and second teeth 117 and 119 protrude, respectively. The first and second contact surfaces 116 and 118 are arranged against each other so that the first teeth 117 are engaged with the second teeth 119.

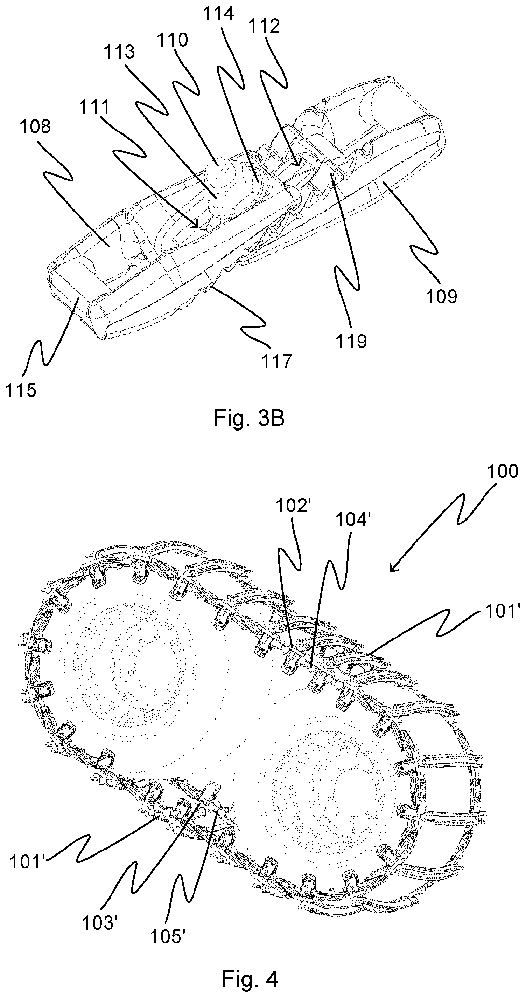

The length of the first and second connecting links 104 and 105 can be varied by changing the relative position between the first and second teeth 117 and 119. The fastening bolt 110 has a length which allows the length of the connecting link 104 or 105 to be changed without removing the nut 113 from the fastening bolt 110. The length of the connecting link 104 or 105 can be changed by loosening the nut 113, changing the relative position between the first and second teeth 117 and 119, and then retightening the nut 113. Figs. 3A and 3B illustrate the connecting link at two different lengths. By changing the lengths of the first and second connecting links 104 and 105, the distance between the track plates 101 can be varied and thus the forest machine track 100 can be optimized for different terrains.

Fig. 4 illustrates a forest machine track according to a second embodiment of the invention. The forest machine track 100 of fig. 4 is similar to that of fig. 1, except that it also comprises track plates 101' which are not releasably attached to each other. The forest machine track 100 of fig. 4 has two sets of these track plates 101', the first set containing two track plates 101' and the second set containing four track plates 101'. First C-shaped track links 102' are attached to first ends of the track plates 101', and second C-shaped track links 103' are attached to second ends of the track plates 101'. The first C-shaped track links 102' of the adjacent track plates 101' are connected to each other with first connecting links 104', and the second C-shaped track links 103' of the adjacent track plates 101' are connected to each other with second connecting links 105'. The first connecting links 104' and the second connecting links 105' are conventional non-releasable connecting links.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A forest machine track, comprising:
- a plurality of track plates having first and second ends,
- a plurality of first C-shaped track links attached to the first ends of the plurality of track plates,
- a plurality of second C-shaped track links attached to the second ends of the plurality of track plates,
- a plurality of first connecting links with which the first C-shaped track links of adjacent track plates are connected to each other, and
- a plurality of second connecting links with which the second C-shaped track links of adjacent track plates are connected to each other,
**characterised in that** each of the plurality of first and second connecting links comprises a first connecting part and a second connecting part releasably attached to each other, wherein said first connecting part and said second connecting part are connected to different C-shaped track links.

2. The forest machine track according to claim 1, **characterised in that** the first connecting part comprises a first contact surface having a plurality of first teeth and the second connecting part comprises a second contact surface having a plurality of second teeth, wherein the first contact surface and the second contact surface are arranged against each other so that the plurality of first and second teeth are at least partly connected.

3. The forest machine track according to claim 2, **characterised in that** the number of the first and second teeth is at least three.

4. The forest machine track according to claim 2 or 3, **characterised in that** each of the plurality of first and second connecting links comprises a fastening bolt arranged to extend through a first opening in the first connecting part and a second opening in the second connecting part, and a nut coupled to an end of the fastening bolt.

5. The forest machine track according to claim 4, **characterised in that** the fastening bolt has a length which allows the length of the connecting link to be changed without removing the nut from the fastening bolt.

6. The forest machine track according to claim 4 or 5, **characterised in that** the first and second openings are elongated.

7. The forest machine track according to any of claims 4 to 6, **characterised in that** the fastening bolt and/or the nut is provided with a washer.

8. The forest machine track according to any of the preceding claims, **characterised in that** the first connecting part and the second connecting part comprises a pin with which the connecting part is connected to an end of the C-shaped track link.

9. The forest machine track according to any of the preceding claims, **characterised in that** the forest machine track comprises a plurality of first side guides attached to the plurality of first C-shaped track links and a plurality of second side guides attached to the plurality of second C-shaped track links.

10. The forest machine track according to any of the preceding claims, **characterised in that** the track plates, C-shaped track links, connecting links and/or side guides are made of heat-treated iron alloy.
